Europäisches Patentamt

European Patent Office

Office européen des brevets

(11) Publication number: **0 281 193 B1**

# EUROPEAN PATENT SPECIFICATION

(45) Date of publication of patent specification: **15.01.92**   (51) Int. Cl.⁵: **B62D 1/18**

(21) Application number: **88200340.3**

(22) Date of filing: **24.02.88**

(54) **Steering column with elastic means for taking up play.**

(30) Priority: **03.03.87 IT 1955487**

(43) Date of publication of application:
**07.09.88 Bulletin 88/36**

(45) Publication of the grant of the patent:
**15.01.92 Bulletin 92/03**

(84) Designated Contracting States:
**DE ES FR GB**

(56) References cited:
**FR-A- 1 488 048**
**FR-A- 2 561 605**
**FR-E- 91 397**
**GB-A- 2 136 928**

(73) Proprietor: **ALFA LANCIA S.p.A.**
**Viale Alfa Romeo**
**I-20020 Arese, Milan(IT)**

(72) Inventor: **Gaetano, Mariani**
**Via Parini, 9**
**I-20030 Barlassina Milano(IT)**
Inventor: **Paolo, Romele**
**Viale Ungheria, 19**
**I-20138 Milano(IT)**

(74) Representative: **De Carli, Erberto et al**
**ING. BARZANO' & ZANARDO MILANO S.p.A.**
**Via Borgonuovo, 10**
**I-20121 Milano(IT)**

## Description

The present invention relates to a motor vehicle steering column.

Medium-to-large sized motor vehicles are often equipped with steering components having devices for tilt - and height -adjustement of the steering column, and thus also of the steering wheel.

In the case of these devices the steering column is generally restrained to the vehicle bodyshell by pins, which permit its rotation, and by cursor or slides that permit its axial sliding, and can be locked in the desired position.

In some cases the steering column itself is of the telescopic type and consists of two shafts, one solid and the other hollow, which are coupled by means of a grooved-profile coupling and which are made rigid, for the purposes of rotation, the one to the steering wheel and the other to the wheel steering mechanism.

Especially after lengthy operation, these sliding couplings can develop clearances or play which, if exceeding the normal range of tolerance, give rise to damaging impacts and irritating rattles.

Moreover, in the specific instance of steering columns with grooved couplings, the steering mechanism responses may in such case no longer be prompt and reliable.

In order to overcome these problems, means for taking up the operating clearance are adopted: it has for example been proposed to form in the hollow shaft a notched and therefore elastic conical bush which can be pressed against the solid shaft through an internally conical sleeve which screws onto the said hollow shaft. This prevents the clearances of the grooves coupling from producing rattles.

However, a solution of such kind is somewhat complex and costly, amongst other things because it calls for periodical regulation.

GB-A-2 136 928 discloses a steering column having the features recited in the preamble of claim 1. In this known steering column the telescopic portions are interconnected through a polygonal coupling having a triangular cross section and the resilient means comprise a leaf spring arranged between one recessed face of the inner shaft portion and the corresponding face of the hollow outer portion of the telescopic coupling.

Thus, the spring provides a "wedging action" urging the triangular inner cross section against the outer one. However, in the known construction the spring is involved in the torque transmission between the two telescopical portions and so the spring must be very strong and large and this requires to provide sufficient space for the spring, so considerably reducing the resisting cross section on the shaft portion of the coupling.

The overall object of the present invention is to overcome the drawbacks of the known art by proposing a different and effective solution which is nevertheless much more straightforward and less costly than the known solutions, allowing clearances, or play, to be taken up automatically. This object is attained by a steering column having the features claimed in claim 1.

The characteristics and advantages of the invention will now be described with reference to the appended drawings, in which a preferred embodiment of the invention is shown by way of illustrative and not limiting example. In the drawings:

- Figure 1 is a partially sectional lateral view of a steering column according to the invention;
- Figure 2 is an enlarged view of a part of the steering column of Figure 1; and
- Figure 3 is a sectional view taken through line III-III of Figure 2.

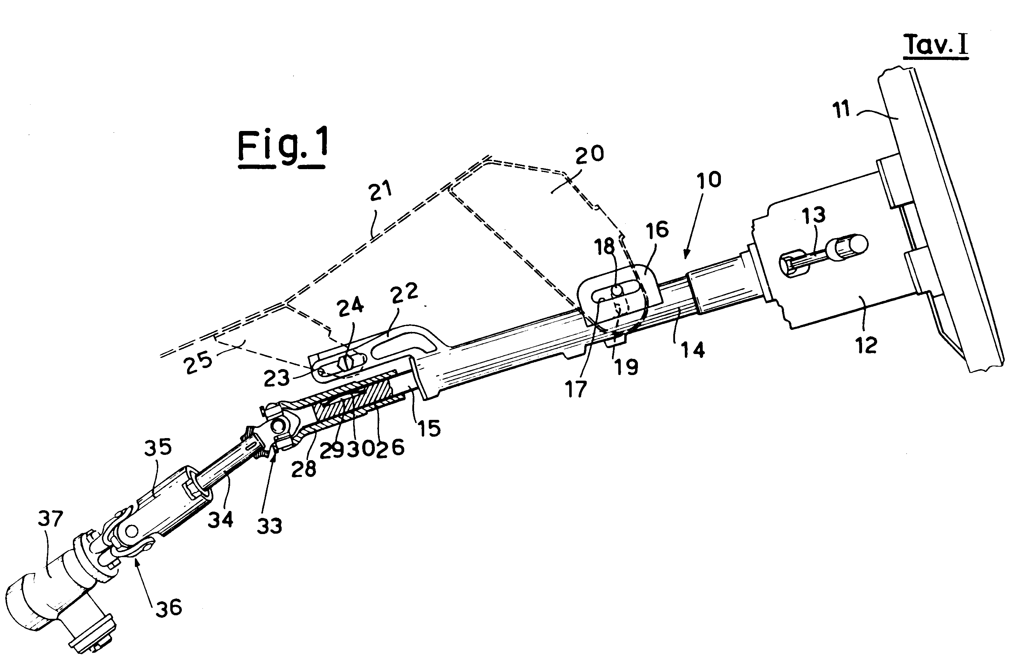

In Figure 1, a motor vehicle steering column is indicated overall by 10, and comprises two telescopically interconnected portions, one thereof is formed by a shaft 15 rigid with the steering wheel 11.

Figure 1 also partially shows a cover 12 of the steering column 10 and a stalk 13 for operating the direction indicators and vehicle lights. A tube 14 supports, through bearings (not shown), the steering column shaft 15.

The tube 14 is provided with a bracket 16 having a slot 17 with which there engages a bolt 18 which in a known manner can be locked into and released from the slot 17 by a manually operated lever (not shown).

Simultaneously, the bolt 18 also engages slots, such as the one shown by the dashed surround at 19, that are formed in two sheet metal strips such as the one indicated by the numeral 20; the two strips 20 are fixed at a distance between them to the dashboard 21 and support the steering column 10 through the bolt 18.

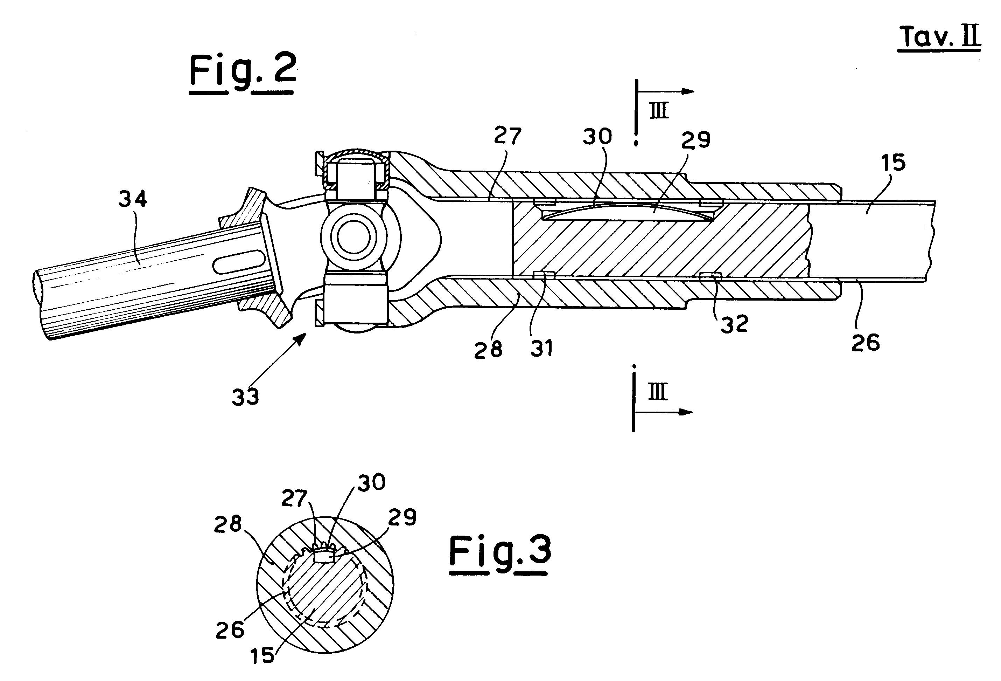

The tube 14 also comprises a nosepiece 22 in which there is a slot 23 rotatably and slidingly supported by a pin 24 which is fixed to two sheet metal strips, such as the strip 25, secured at a distance between them to the dashboard 21. The shaft 15, which is solid, has a grooved surface 26, more clearly seen in Figures 2 and 3, which is engaged by a conjugated grooved surface 27 formed in a hollow shaft 28 which is arranged telescopically on the shaft 15 and forms the second portion of the telescopic steering column. Thus, the mutually engaging conjugated surfaces 26, 27 allow relative axial movement between the portions 15, 28, while maintaining rotational engagement thereof.

The shaft 15 also has a longitudinal hollow 29 in a groove-free region, in which there is disposed a pre-loaded spring 30 as a resilient means acting generally radially for keeping the conjugated grooved surfaces 26, 27 in play free reciprocal contact. Figure 2 illustrates annular slots 31 and 32, which act as discharge ports for the detritus produced by the machining of the hollow 29. As visible in Fig. 3, the leaf spring 30 engages with its central portion the crests between the grooves of the hollow shaft 28 and is therefore not involved in transmitting Forque between the portions 15, 28. The longitudinal edges of the leaf spring 30 engage the longitudinal walls of the hollow 29.

The hollow shaft 28 is connected through a U-joint 33 to a shaft 34 which is in turn connected by means of an elastic sleeve 35 and a further U-joint 36 to a pinion of the steering mechanism, not shown, which is rotatably supported by a box 37.

As illustrated in the drawings, the steering column 10, and thus also the steering wheel 11, is tilt- and height-wise adjustable in that, by releasing the bolt 18, the tube 14 supporting the shaft 15 can slide axially and rotate about the pin 24, guided by the slots 23, 17, 19 as a result of the existence of the grooved profile coupling 26, 27, and the U-joints 33 and 36.

When the desired disposition has been obtained, the tube 14 is secured by locking the bolt 18 in the new position. The spring 30 automatically cancels out any play between the grooved profile couplings 26, 27, especially after long operation, thus preventing impacts between the teeth of the said coupling, and preventing rattle.

The object set out in the preamble to the specification is thus achieved in a more than ordinary straighforward and economical manner.

## Claims

1. Steering column (10) having one end for connection to a steering wheel (11) and another end for connection to a steering mechanism of a vehicle, comprising two telescopically interconnected portions (15,28) having mutually engaging conjugated surfaces (26,27) allowing relative axial movement between said portions (15,28) while maintaining rotational engagement thereof, between said telescopic portions (15,28) there being arranged resilient means (30) acting generally radially for keeping the conjugated surfaces (26,27) of the telescopic portions (15,28) in play-free reciprocal contact, characterized in that said surfaces (26,27) are grooved surfaces forming a grooved-profile coupling between said portions (15,28) which restrains them in a rotoid manner, and that said resilient means (30) are arranged in a groove-free region of one of said portions (15,28) and engage the crests between the grooves of the other of said portions (28 resp.15).

2. Steering column as claimed in claim 1, wherein the said resilient means (30) consist of a leaf spring, characterized in that said leaf spring is arranged in a longitudinal hollow (29) provided in said one of said portions (15,28) and having longitudinal walls engaging the longitudinal edges of said leaf spring, the central portion of said leaf spring engaging said crests.

## Revendications

1. Colonne de direction (10) ayant une extrémité destinée à être reliée à un volant (11) et une autre extrémité destinée à être reliée à un mécanisme de direction d'un véhicule, comprenant deux parties (15, 28) reliées entre elles de manière télescopique comportant des surfaces conjuguées (26, 27) en engagement mutuel qui permettent un mouvement axial relatif entre lesdites parties (15, 28) tout en maintenant leur engagement en rotation, des moyens élastiques (30), disposés entre lesdites parties télescopiques (15, 28), agissant généralement radialement pour maintenir les surfaces conjuguées (26, 27) des parties télescopiques (15, 28) en contact réciproque sans jeu, caractérisée en ce que lesdites surfaces (26, 27) sont des surfaces rainurées formant un accouplement à profil rainuré entre lesdites parties (15, 28) qui les retient de manière rotoïdale, et en ce que lesdits moyens élastiques (30) sont disposés dans une région exempte de rainures de l'une desdites parties (15, 28) et sont en contact avec les sommets situés entre les rainures de l'autre desdites parties (28 ou 15).

2. Colonne de direction selon la revendication 1, dans laquelle lesdits moyens élastiques (30) consistent en un ressort à lames, caractérisée en ce que ledit ressort à lames est disposé dans une cavité longitudinale (29) prévue dans l'une desdites parties (15, 28) et comportant des parois longitudinales qui sont en contact avec les bords longitudinaux dudit ressort à lames, la partie centrale dudit ressort à lames étant en contact avec lesdits sommets.

## Patentansprüche

1. Lenksaeule (10) mit einem Ende fuer die Verbindung mit einem Lenkrad (11) und einem anderen Ende fuer die Verbindung mit einem Lenkmechanismus eines Fahrzeuges, umfassend zwei teleskopierbar miteinander verbundene Abschnitte (15,28) mit gegenseitig in Eingriff bringbaren, komplementaeren Oberflaechen (26,27), welche eine axiale Relativbewegung zwischen den Abschnitten (15, 28) ermoeglichen, waehrend eine Drehverbindung aufrecht erhalten ist, wobei zwischen den teleskopierbaren Abschnitten (15,28) in radiale Richtung wirksame, elastische Mittel (30) angeordnet sind, um die komplementaeren Oberflaechen (26,27) der teleskopierbaren Anschnitte (15,28) in spielfreiem, gegenseitigen Kontakt zu halten, dadurch gekennzeichnet, dass die Oberflaechen (26,27) mit Rillen versehene Oberflaechen sind, welche eine Kupplung mit Rillenprofil zwischen den Abschnitten (15, 28) ausbilden, welche sie gegenueber einer Verdrehung sichert, und dass die elastischen Mittel (30) in einem von Rillen freien Bereich eines der Abschnitte (15,28) angeordnet sind und mit den Scheiteln zwischen den Rillen des anderen Abschnittes (28 bzw.15) in Eingriff bringbar sind.

2. Lenksaeule nach Anspruch 1, wobei die elastichen Mittel (30) aus einer Blattfeder bestehen, dadurch gekennzeichnet, dass die Blattfeder in einer in einem der Abschnitte (15,28) ausgebildeten laenglichen Ausnehmung (29) angeordnet ist, deren Laengswaende mit den Laengskanten der Blattfeder zusammenwirken, wobei der zentrale Bereich der Blattfeder mit den Scheiteln zusammenwirkt.

Fig.1

Tav.1

EP 0 281 193 B1

Tav. II

Fig.2

Fig.3